(19) **Europäisches Patentamt**

**European Patent Office**

**Office européen des brevets**

(11) **EP 1 696 625 A1**

(12) **EUROPÄISCHE PATENTANMELDUNG**

(43) Veröffentlichungstag:
**30.08.2006 Patentblatt 2006/35**

(51) Int Cl.:
*H04L 29/06* (2006.01) *H04L 12/28* (2006.01)

(21) Anmeldenummer: **05027185.7**

(22) Anmeldetag: **09.02.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(62) Dokumentnummer(n) der früheren Anmeldung(en) nach Art. 76 EPÜ:
**05002649.1 / 1 691 521**

(71) Anmelder: **Deutsche Post AG**
**53113 Bonn (DE)**

(72) Erfinder:
• **Kranz, Jürgen**
**50374 Erftstadt (DE)**
• **Westerweller, Jörg**
**51570 Windeck / Rosbach (DE)**

(74) Vertreter: **Jostarndt, Hans-Dieter**
**Brüsseler Ring 51**
**52074 Aachen (DE)**

Bemerkungen:
Diese Anmeldung ist am 13 - 12 - 2005 als Teilanmeldung zu der unter INID-Kode 62 erwähnten Anmeldung eingereicht worden.

(54) **Datenübertragungssytem, Benachrichtigungskomponente und Verfahren zum Übertragen von Daten**

(57) Die Erfindung betrifft ein Datenübertragungssystem zum Übertragen von Daten zwischen einer Zentraleinheit und mehreren Endgeräten.

Erfindungsgemäß zeichnet sich das Datenübertragungssystem dadurch aus, dass die Zentraleinheit und wenigstens eines der Endgeräte durch wenigstens zwei Übertragungskanäle verbindbar sind, dass das System ein Mittel zur Zuweisung eines der Übertragungskanäle aufweist, dass das Mittel zur Zuweisung des Übertragungskanals so ausgestaltet ist, dass es die Zuweisung anhand von Informationen über die zu übermittelnden Daten vornehmen kann und dass bei einer Übertragung von Daten überprüft wird, ob der zugewiesene Übertragungskanal so beschaffen ist, dass er eine Mitübermittlung von weiteren Daten als den ursprünglich zugewiesenen Daten ermöglicht.

EP 1 696 625 A1

**Beschreibung**

Die Erfindung betrifft ein Datenübertragungseystem zum Übertragen von Daten zwischen einer Zentraleinheit und mehreren Endgeräten.

Die Erfindung betrifft ferner eine für den Einsatz in dem Datenübertragungssystem geeignete Benachrichtigungskomponente.

Die Erfindung betrifft außerdem ein Verfahren zum Übertragen von Daten zwischen einer Zentraleinheit und mehreren Endgeräten mit einer Erzeugung und Übertragung der Daten.

Es ist wünschenswert, eine möglichst hohe Flexibilität von Datenübertragungen und eine möglichst wirksame und Übertragungeressourcen schonende Übertragung von Daten zu ermöglichen.

Erfindungsgemäß wird ein Datenübertragungssystem nach Anspruch 1, eine Benachrichtigungskomponente nach Anspruch 2 und ein Verfahren zum Übertragen von Daten nach Anspruch 3 bereitgestellt.

Die Erfindung sieht vor, für eine Übertragung von Daten mehrere Übertragungskanäle bereitzustellen und den Daten wenigsten einen der Übertragungskanäle zuzuweisen.

Die erfindungsgemäße Ausgestaltung des Datenübertragungssystems, der Benachrichtigungskomponente und des Verfahrens zum Übertragen von Daten zeichnet sich dadurch aus, dass bei einer Übertragung von Daten überprüft wird, ob der zugewiesene Übertragungskanal so beschaffen ist, dass er eine Mitübermittlung von weiteren Daten als den ursprünglich zugewiesenen Daten ermöglicht.

Dies hat den Vorteil, dass ein Mitnehmen von Daten erfolgt, die eigentlich nicht für eine Übertragung vorgesehen sind, wobei das Mitnehmen jedoch den für die Übertragung der anderen Daten bereits geöffneten Übertragungskanal mitnutzt, soweit der Übertragungskanal und/oder seine Übertragungsparameter (Übertragungskapazität, Datenvolumen) ein derartiges Mitübertragen zulässt.

Hierbei ist es besonders vorteilhaft, dass bei einer Übertragung von Daten mit einer hohen Priorität für die Datenübertragung überprüft wird, ob Daten vorhanden sind, die eine niedrigere Priorität aufweisen, gleichfalls über den für die Übertragung der Daten hoher Priorität zugewiesenen Übertragungskanal übertragen werden können.

Ferner ist es zweckmäßig, das Datenübertragungssystem, die Benachrichtigungskomponente und das Verfahren so auszugestalten, dass eine Datenübertragung erfolgt, wenn Daten einer vorgebbaren Datenart ein vorgebbares Datenvolumen erreicht haben.

Zweckmäßigerweise erfolgt die Zuweisung des Übertragungskanals anhand von Informationen über die zu übermittelnden Daten.

Es ist besonders zweckmäßig, dass die beiden Übertragungskanäle sich in wenigstens einem Merkmal voneinander unterscheiden. Bei mehreren Übertragungskanälen ist es dementsprechend zweckmäßig, dass sich wenigstens einer der Übertragungskanäle durch wenigstens ein einzelnes Merkmal von einem der anderen Übertragungskanäle unterscheidet. Beispielsweise ist einer der Übertragungskanäle schneller als wenigstens einer der anderen Übertragungskanäle, beispielsweise durch Vorsehen einer schnellen Online-Verbindung mit entsprechend schnellen technischen Übertragungsmitteln, vorzugsweise zu einer Online-Datenübertragung, zum Beispiel ein DSL-Kanal, ein Glasfasernetzwerk, ein WLAN-Netz, eine GPRS-Verbindung oder eine UMTS-Verbindung.

Die Unterschiede zwischen den Übertragungskanälen können sowohl sehr gering sein als auch sehr beträchtlich. Das Ausmaß der Unterschiede hängt von dem jeweiligen Einsatzgebiet ab. Insbesondere bei einem Einsatz in komplizierten Datenübertragungssystemen kommen sehr unterschiedliche Übertragungswege in Betracht, da einzelne Bestandteile über große räumliche Entfernungen aufgestellt sein können. Grundsätzlich lässt sich das Verfahren sowohl innerhalb eines einzelnen Gebäudes durchführen, als auch bei einem das Gebiet einer Stadt, einer Region oder eines Landes umspannenden Netz beziehungsweise auch bei weltweiten Netzen, beispielsweise Datennetzen von weltweit aktiven Logistikunternehmen wie die Anmelderin, die in über 200 Ländern tätig ist.

Eine Vernetzung einzelner Datenverarbeitungseinheiten über mehrere Kilometer, mehrere 100 Kilometer beziehungsweise mehrere 1.000 oder mehrere 10.000 Kilometer kann auf unterschiedliche Weise erfolgen und kann durch den Einsatz der Erfindung in unterschiedlichen Regionen auf verschiedene Weise implementiert werden.

Beispielsweise ist es möglich, einen der Übertragungskanäle besonders zu kapseln und/oder abzuschirmen und so einen missbräuchlichen Zugriff auf in ihm enthaltene Daten abzuwehren.

Andere Kriterien, durch die sich wenigstens einer der Übertragungskanäle auszeichnet, können beispielsweise die Menge der übertragbaren Daten oder die eingesetzte Art der Benachrichtigung sein.

Beispiele für Mengenbegrenzungen von Übertragungskanälen können beispielsweise auch vorgebbare Übertragungsvolumina sein, beispielsweise eine vorgebbare Anzahl von Megabyte oder Gigabyte.

Ferner können unterschiedliche Übertragungsmittel eingesetzt werden, beispielsweise SMS, MMS-Kurznachrichten oder Online-Datenverbindungen.

Eine besonders bevorzugte Ausführungsform des Datenübertragungssystems, der Benachrichtigungskomponente und des Verfahrens zum Übertragen von Daten zeichnet sich dadurch aus, dass das Mittel zur Zuweisung des Übertragungskanals so ausgestaltet ist, dass das Datenübertragungssystem Eigenschaften der zu übermittelnden Daten auswerten kann und dass das Mittel zur Zuweisung des Übertragungskanals die Zuweisung des Übertragungskanals anhand der ermittelten Eigenschaften der Daten vornimmt.

Diese Ausführungsform der Erfindung hat den Vorteil, dass unterschiedliche Daten auf verschiedene Weise verarbeitet und/oder übertragen werden können.

Ein weiterer Vorteil dieser Ausführungsform ist, dass eine flexible Anpassung an unterschiedliche Eigenschaften der Daten ermöglicht wird.

Insbesondere ist es hierdurch auch möglich, das Verfahren besonders flexibel durchzuführen beziehungsweise die Benachrichtigungskomponente und/oder das Datenübertragungssystem anpassbar auszugestalten.

Insbesondere ist es möglich, durch Veränderungen von Eigenschaften des Mittels zur Zuweisung des Übertragungskanals Übertragungsparameter für Vorgänge des Datenübertragungssystems Datenübertragungen für eine Vielzahl von Endgeräten, beispielsweise in mehreren Endgeräten und/oder in mehreren Filialen (teilweise mehrere tausend oder zehntausend), durch Änderung an einem einzelnen Mittel oder wenigen ausgewählten Mitteln zur Zuweisung des Übertragungskanals zu verändern.

Insbesondere ist es hierdurch möglich, neue Übertragungsverfahren oder Übertragungsstandards ändern zu können, ohne in Eigenschaften der Endgeräte eingreifen zu müssen.

Eine zweckmäßige Ausführungsform des Datenübertragungssystems, der Benachrichtigungskomponente und des Verfahrens zum Übertragen von Daten zeichnet sich dadurch aus, dass das Datenübertragungseystem ein Mittel zum Verbinden der Daten mit Informationen über Auswahlkriterien für den zuzuweisenden Übertragungskanal enthält.

Hierdurch ist es möglich, gewünschte Eigenschaften für eine Übertragung der Daten an mehreren, beziehungsweise an beliebigen Knotenpunkten eines Übertragungsnetzes mit möglichst geringem Aufwand zu ermitteln.

Eine besonders bevorzugte Ausführungsform des Datenübertragungssystems, der Benachrichtigungskomponente und des Verfahrens zum Übertragen von Daten zeichnet sich dadurch aus, dass das Mittel zum Verbinden der Daten mit den Informationen über die Auswahlkriterien für den zuzuweisenden Übertragungskanal in einem Vorgangsbearbeitungsmodul angeordnet ist.

Eine zweckmäßige Ausführungsform des Datenübertragungssystems, der Benachrichtigungskomponente und des Verfahrens zum Übertragen von Daten zeichnet sich dadurch aus, dass sich das Vorgangsbearbeitungsmodul in einem der Endgeräte und/oder in einer mit einem der Endgeräte verbundenen Datenverarbeitungseinheit befindet.

Hierdurch ist es möglich, bereits bei einer Erzeugung und/oder einer Verarbeitung der Daten festzulegen, welchen Anforderungen eine nachfolgende Übertragung der Daten entsprechen soll.

Dies ist besonders vorteilhaft, um eine möglichst schnelle und zeitnahe Verarbeitung von Daten zu erzielen.

Außerdem kann hierdurch erreicht werden, dass Daten, die besonderen Anforderungen genügen sollen, beispielsweise vor einem unbefugten Zugriff zu schützen sind, wie beispielsweise personenbezogene Daten (Ausweis-Nummern, biometrische Daten, Kreditkarten-Nummern) diesen Anforderungen entsprechend verarbeitet werden.

Eine besonders bevorzugte Ausführungsform des Datenübertragungssystems, der Benachrichtigungskomponente und des Verfahrens zum Übertragen von Daten zeichnet sich dadurch aus, dass sich das Mittel zum Verknüpfen der Daten mit den Informationen über die Auswahlkriterien für den zuzuweisenden Übertragungskanal in einer mit wenigstens einem der Endgeräte verbundenen Datenverarbeitungseinheit befindet.

Ein derartiger Einsatz des Mittels zum verknüpfen der Daten mit den Informationen über die Auswahlkriterien für den zuzuweisenden Übertragungskanal in einem der Endgeräte ist vor allen Dingen für die Übertragung sinnvoll, die von den Endgeräten zu anderen Endgeräten und/oder einer Zentraleinheit erfolgt.

Die Erfindung kann jedoch auch für den umgekehrten Fall eingesetzt werden, dass eine Übertragung von einer oder mehreren Zentralstellen zu Endgeräten erfolgt.

Besonders bevorzugte Ausführungsformen der Erfindung beinhalten sowohl im Bereich der Endgeräte oder der unmittelbar mit ihnen verbundenen Datenverarbeitungsanlagen als auch im Bereich zentraler Datenverarbeitungsanlagen entsprechende Mittel zum Verknüpfen der Daten mit den Informationen über die Auswahlkriterien für den zuzuweisenden Übertragungskanal und/oder die Mittel für die Zuweisung des Übertragungskanals.

Somit ist es besonders zweckmäßig, dass verschiedene Mittel zur Auswahl des Übertragungsweges vorgesehen sein können und dass sich beispielsweise einzelne der Mittel im Bereich der Endgeräte befinden und dass wenigstens ein anderes Mittel zur Auswahl eines Übertragungskanals sich an anderen Stellen, beispielsweise im zentralen Übertragungsknoten oder im Bereich von zentralen Speicherpunkten (Datensätze), insbesondere im Bereich von Stammdatenverwaltungskomponenten befindet.

Besonders zweckmäßige Ausführungsformen der Erfindung sehen somit vor, verschiedene Mittel zum Auswählen des Übertragungsweges einzusetzen.

Hierdurch ist es möglich, in einem umfangreicheren Filialsystem Parameter einzelner Übertragungswege beziehungsweise im Bereich einzelner Übertragungskanäle unabhängig von Eigenschaften für eine Übertragung zwischen anderen Komponenten, die auf andere Übertragungskanäle zurückgreifen können, zu ändern.

Eine zweckmäßige Ausführungsform des Datenübertragungssystems, der Benachrichtigungskumponente und des Verfahrens zum Übertragen von Daten zeichnet sich dadurch aus, dass das Mittel zum Verbinden der Daten mit den Informationen über die Anforderungen für den zuzuweisenden Übertragungskanal die Informationen über die Auswahlkriterien in eine mit den Daten verbindbare Konfigurationsdatei einbringt.

Hierdurch ist es möglich, schnell und vereinheitlichbar auf die Anforderungen an die Datenübertragung zuzugreifen und eine Datenübertragung entsprechend dieser Anforderungen vorzunehmen, beziehungsweise eine Entscheidung über eine gezielte Übertragung der Daten zu einem späteren Zeitpunkt oder über einen anderen Übertragungskanal vorzunehmen.

Eine besonders bevorzugte Ausführungsform des Datenübertragungssystems, der Benachrichtigungskomponente und des Verfahrens zum Übertragen von Daten zeichnet sich dadurch aus, dass das Mittel zum Verbinden der Daten mit den Informationen über die Auswahlkriterien für den zuzuweisenden Übertragungskanal die Daten in einen virtuellen Briefumschlag einbringt und diesen mit den Informationen über die Auswahlkriterien für den zuzuweisenden Übertragungskanal verbindet.

Ein derartiger virtueller Briefumschlag ist mit dem Vorteil verbunden, dass Dateninhalte von äußeren Anforderungen an die Datenübertragung leicht entkoppelt werden können. Außerdem ist hierdurch eine weitere Erhöhung der Datensicherheit erzielbar.

Eine zweckmäßige Ausführungsform des Datenübertragungssystems, der Benachrichtigungskomponente und des Verfahrens zum Übertragen von Daten zeichnet sich dadurch aus, dass die Benachrichtigungskomponente ein Mittel zum Erfassen von Informationen über Auswahlkriterien für einen zuzuweisenden Übertragungskanal enthält, dass die Benachrichtigungskomponente so beschaffen ist, dass sie eine Datenübertragung durch Übertragungskanäle vornehmen kann und dass die Benachrichtigungskomponente anhand der Informationen über die Auswahlkriterien für einen zuzuweisenden Übertragungskanal den Übertragungskanal zuweist.

Eine besonders bevorzugte Ausführungsform des Datenübertragungssystems, der Benachrichtigungskomponente und des Verfahrens zum Übertragen von Daten zeichnet sich dadurch aus, dass anhand von Eigenschaften der Daten eine Zuweisung eines Übertragungskanals für die Übermittlung der Daten erfolgt.

Eine zweckmäßige Ausführungsform des Datenübertragungssystems, der Benachrichtigungskomponente und des Verfahrens zum Übertragen von Daten zeichnet sich dadurch aus, dass vor oder während der Erzeugung der Daten Auswahlkriterien für den zuzuweisenden Übertragungskanal erstellt werden.

Eine besonders bevorzugte Ausführungsform des Datenübertragungssystems, der Benachrichtigungskomponente und des Verfahrens zum Übertragen von Daten zeichnet sich dadurch aus, dass die Daten in einem Vorgangsbearbeitungsmodul erzeugt werden.

Eine besonders bevorzugte Ausführungsform des Datenübertragungssystems, der Benachrichtigungskomponente und des Verfahrens zum Übertragen von Daten zeichnet sich dadurch aus, dass ein Fälligkeitsdatum für eine Übertragung der Daten ermittelt wird.

Eine Auswertung der Fälligkeitsdaten kann aktiv und/oder passiv erfolgen.

Erfindungsgemäß wird eine Differenzierung zwischen verachiedenen Datenkategorien vorgenommen.

Die vorgenommene Differenzierung zwischen verschiedenen Datenkategorien ermöglicht eine Vergrößerung der Einsatzmöglichkeiten der Daten, zum Beispiel bei komplizierten Datenbanksystemen oder Systemen mit einer Vielzahl von vernetzten Endgeräten, beispielsweise Fahrkarten- oder Bankautomaten.

Weitere Vorteile, Besonderheiten und zweckmäßige Weiterbildungen der Erfindungen ergeben sich aus den Unteransprüchen und der nachfolgenden Darstellung anhand der Abbildung.

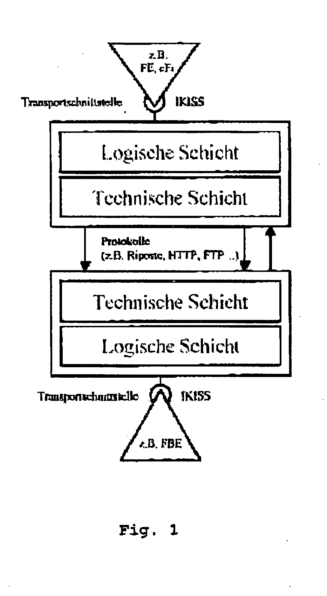

Die Abbildung (Fig. 1) zeigt:

eine Prinzipdarstellung eines Datenübertragungssystems zwischen einem Filial-Frontend FE und einem Filial-Backend FBE

In der Abbildung wird der Einsatz der Erfindung bei der Erzeugung, Verwaltung und Übermittlung von Daten eines aufwendigen Datenbanksystems dargestellt. Das Datenverarbeitungssystem enthält mehrere Vorgangsbearbeitungsmodule, die jeweils - vorzugsweise unabhängig voneinander - Daten erhalten und/oder übermitteln.

Es ist besonders vorteilhaft, die Erfindung bei einem komplexen System einzusetzen, da hier der Aufwand der zu übertragenden Daten besonders hoch ist und so die positiven Effekte der Erfindung besonders gut wirken.

Es ist jedoch gleichfalls möglich, die Erfindung bei einem weniger aufwendigen System einzusetzen und auch dort die Vorteile einer wirksameren Nutzung von Übertragungskapazitäten zu erzielen.

Die nachfolgend dargestellte Benachrichtigungskomponente ermöglicht ein Schalten von verschiedenen Übertragungswegen.

Nachfolgend werden beispielhaft Einzelheiten einer besonders bevorzugten Benachrichtigungskomponente KISS (Komponenten-Infrastruktur-Service) dargestellt.

Die dargestellte Benachrichtigungskomponente KISS stellt eine besonders bevorzugte Ausführungsform einer erfindungsgemäßen Benachrichtigungskomponente dar.

Die Benachrichtigungskomponente ermöglicht eine Auswahl von Übertragungswegen zum Übermitteln von Benachrichtigungen.

Eine besonders bevorzugte Ausführungsform der Benachrichtigungskomponente zeichnet sich dadurch aus, dass es mehrere (beispielsweise drei) Möglichkeiten gibt, Daten zu versenden (Remote; Offline-Weg; Online-Anfrage) und dass KISS eine Optimierung des Übertragungsweges vornimmt. Hierdurch werden erhebliche Übertragungskosten gespart. Dies geschieht auch dadurch, dass bei der Online-Anfrage auch für den Offline-Weg bestimmte Daten "mitgenommen" werden.

Zweckmäßigerweise wird die Benachrichtigungskomponente so ausgestaltet, dass sie ein Auswahlmittel zur Auswahl eines Übertragungskanals mit einer für den jeweiligen Übertragungszweck geeigneten Datenrate enthält.

Es ist vorteilhaft, dass die Benachrichtigungskomponente als Datenschalter wirkt und/oder einen Datenschalter beinhaltet.

Eine zweckmäßige Weiterbildung der Benachrichtigungskomponente KISS beinhaltet das "Mitnehmen" von Daten niedrigerer Priorität bei einem für eine Übertragung von Daten höherer Priorität bereits geöffneten Übertragungskanal.

Ein besonderer Vorteil der dargestellten Benachrichtigungskomponente KISS ist, dass andere Komponenten der Zielarchitektur die Funktionalität von KISS unabhängig von der internen Funktionsweise von KISS nutzen können.

Besonders bevorzugte Verfahrensachritte werden nachfolgend erläutert:

In einer besonders bevorzugten Ausführungeform der Erfindung wird folgendes Verfahren durchgeführt:

Verfahren zur Übertragung von Daten zwischen einem Nutzerendgerät und einer Zentraleinheit, wobei das Verfahren die folgenden Schritte aufweist:

a) Bereitstellen von mehreren Dienstleistungen, die an dem Nutzerendgerät auswählbar sind;

b) Erfassen von Eingaben, die ein Nutzer bei der Bedienung des Nutzerendgerätes erzeugt;

c) Umwandeln der Eingaben in Übertragungsdaten;

d) Übermitteln der Übertragungsdaten an die Zentraleinheit; wobei das Verfahren dadurch gekennzeichnet ist, dass die Übertragungsdaten automatisch einem Übertragungskanal mit einer niedrigen Datenrate oder einem Übertragungskanal mit einer hohen Datenrate zugeführt werden.

Ein derartiges Verfahren eignet sich insbesondere für einen Einsatz in einem Filialsystem oder in einem System, bei dem eine Vielzahl von Automaten mit einem Zentralsystem in Verbindung steht. Ein wichtiger Vorteil der Erfindung ist, dass andere Komponenten des erfindungsgemäßen Netzwerksystems die Funktionalität der Benachrichtigungskomponente unabhängig von der internen Funktionsweise der Benachrichtigungskomponente benutzen können.

Außerdem ist die Erfindung mit dem Vorteil der Einsparung von Übertragungsaufwendungen verbunden.

KISS ermöglicht die Verknüpfung des Filial-Frontends mit dem Filial-Backend und ist im Filial-Backend für die Kommunikation der Services untereinander zuständig. KISS lagert zum einen im Filial-Frontend und ist dort mit der CARBON-Datenkomponente durch eine Schnittstelle verbunden. Das Filial-Backend verfügt über einen KISS Gegenpart. Die KISS-interne Datenübertragung basiert dabei vorzugsweise auf XML und/oder SOAP. Eine Verknüpfung von Rechnern kann grundsätzlich über einen langsamen Nachrichtenweg oder eine schnelle Verbindung hergestellt werden. Die Besonderheit von KISS besteht darin, eine Symbiose erreicht zu haben. KISS ist in der Lage, ankommende Daten zu sortieren, d.h. den Daten den einen oder den anderen Weg zuzuweisen. Für den langsamen Nachrichtenweg setzt KISS beispielsweise die Kommunikationsmiddleware Riposte ein, während die schnellere Verbindung über das Remote-Übertragungssystem hergestellt wird.

Das Frontend bezeichnet insbesondere einen Arbeitsplatz, an dem ein Mitarbeiter Tätigkeiten ausführt. Beispielsweise nimmt der Mitarbeiter in der Filiale die Kundenwünsche entgegen und erfasst Kundendaten, Kundenwünsche und so weiter, beispielsweise mit Hilfe einer grafischen Benutzungsoberfläche, die den Mitarbeiter bei der vollständigen Eingabe aller erforderlichen Angaben unterstützt.

Das Backend bezeichnet insbesondere ein Hintergrundsystem. In dem Hintergrundsystem werden Vorgänge protokolliert und Kundendaten gespeichert. Darüber hinaus werden in dem Hintergrundsystem Daten gespiegelt und archiviert, insbesondere um die Grundsätze ordentlicher Buchführung zu verwirklichen.

Das Frontend, das Backend und die zu ihrer Verknüpfung eingesetzten Komponenten bilden in einer besonders bevorzugten Ausführungsform ein Filialsystem.

Die Erfindung eignet sich insbesondere für einen Einsatz der Übertragung unterschiedlicher Datensätze. Eine besonders bevorzugte Ausführungsform ist eine Datenkomponente.

Die Datenkomponente betrifft Datensätze, die mit einer Konfigurationsdatei verbunden sind. Die Konfigurationsdatei ermöglicht einen zentralen Zugriff auf lokal gespeicherte Daten.

In einer besonders bevorzugten Ausführungsform besteht die Datenkomponente aus einer Business-Schicht, einer technischen Verwaltungsschicht und einer technischen Adapterschicht. Die Datenkomponente steuert die Zugriffe auf lokale und im Backend angesiedelte Datenquellen. Hierzu besteht eine Schnittstelle zu KISS.

Die Erfindung eignet sich insbesondere für einen Einsatz in einem Netzwerk, welches einen oder mehrere Server beinhaltet. Ein Client initialisiert bei seinem Start einen Anwendungsrahmen. Der Client kann dabei eine Plattform mit weiteren Komponenten eines Frameworks wie Datenbanken, Abrechnungsmodule etc. nutzen. In einem besonders bevorzugten Ausführungsbeispiel der Erfindung kann eine als CARBON(Component **AR**chitecture for **B**usiness **O**ptimizatio**N**)-Plattform bezeichnete Plattform genutzt werden, welche sowohl durch geeignete Hardware-Komponenten (zum Beispiel auf Grundlage programmierbarer elektronischer Bauelemente) als auch unter Einsatz von Software realisiert und auf Datenverarbeitungsanlagen installiert sein kann. Das Framework beinhaltet dabei die Laufzeitbibliothek der Plattform, welche auch als Common Language Runtime bezeichnet wird (CLR). Nach der Initialisierung des Anwendungsrahmens durch den Client initialisiert und startet dieser zweckmäßigerweise den Kern des Frameworks. Vor der Initialisierung des Kerns können Prüfungen durchgeführt werden, welche beispielsweise die Integrität des Programms betreffen. Ferner kann überprüft werden, ob es sich um einen Start oder einen Recovery-Fall handelt, welcher durch einen Abbruch eines Vorganges erzeugt wurde.

Das Vorgangsbearbeitungsmodul befindet sich vorzugsweise ebenfalls auf dem Client. Dabei können auf dem Client mehrere verschiedene Versionen eines Vorgangsbearbeitungsmoduls installiert sein. Beim Starten des Vorgangsbearbeitungsmoduls wird automatisch die Version mit der höchsten Versionsnummer herangezogen. Um dies zu ermöglichen, sind die Vorgangsbearbeitungsmodule in einer bestimmten Weise in einem Vorgangsbearbeitungsmodul-Verzeichnis abgelegt worden.

In einem bevorzugten Ausführungsbeispiel der Erfindung ist das Vorgangsbearbeitungsmodul ebenfalls an ein Framework angeschlossen, das vorzugsweise objektorientiert und komponentenorientiert ausgebildet ist. Bei dem Framework handelt es sich um ein API (Application Programming Interface), welches die Funktionalitäten bereitstellt, Clients für verschiedene Assistent-basierte Vorgangsarten zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul zum Starten der Vorgangsbearbeitungsmodule bereit. Ferner unterstützt das Framework die Vorgangsbearbeitungsmodule bei Datenhaltung und Ablaufsteuerung und stellt Komponenten für den Zugriff auf Daten oder zum Drucken bereit. Darüber hinaus werden Basisfunktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programms vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen, und die Kapselung trennt die Implementierung von der Schnittstelle.

In einem besonders bevorzugten Ausführungsbeispiel der Erfindung ist das Vorgangsbearbeitungsmodul kein eigenständiges Programm, sondern benötigt zu seiner Ausführung die Infrastruktur eines Clients. Es handelt sich jedoch um eine aktive Komponente, welche beispielsweise das eigene Pausieren urld/oder den Start anderer Vorgangsbearbeitungsmodule bewirken kann.

Ferner können einzelne Vorgangsbearbeitungsmodule im Frontend auf dem Client angeordnet sein, während sich andere Bereiche im Backend, das heißt auf einer zentralen Serverapplikation oder in einem Umsystem befinden können.

Der Versand von Rohdaten ist eine der wichtigsten Aufgaben des CARBON-Frameworks. Sämtliche Daten, die am Frontend erfasst werden, verschickt das CARBON-Framework in Form von Rohdatensätzen an das Backend, Die Steuerung des Rohdatenversands wird innerhalb der Vorgangsart im BusinessObject implementiert. Die Funktionalitäten des Rohdatenversands werden im Wesentlichen durch das Zusammenwirken folgender Bestandteile realisiert:

RdItemFilter, RdSender, SendDataManager, RdManager, RdItemLiBt, RdItemFragment und RdItem.

Wie alle Dienstleistungen (Service-Pattern) innerhalb von Carbon wird auch das Versenden von Rohdaten den Vorgangsarten über Dienste zur Verfügung gestellt. Die Schnittstelle, die den Zugang hierfür bereitstellt, heißt IRdManager und wird im RdManager bzw. RdItemFilter implementiert.

Nachfolgend werden wichtige am Rohdatenversand beteiligte Objekte näher erläutert.

Bestandteile

RdManager (IRdManager, IRdCollectionHandler)

Der RdManager wird im Rahmen des Rohdatenversands nicht direkt instanziiert und benutzt. Seine Funktionalitäten stellt er den Vorgangsarten über die Schnittstellen IRdManager und IRdCollectionHandler (Service-Pattern) zur Verfügung. Der RdsManager wickelt den eigentlichen Versand der Rohdaten ab, indem er die Verbindung mit dem Backend über DataServices aufbaut. Bevor die Daten verschickt werden, müssen die temporären Schlüssel der Rohdatensätze durch fortlaufende Schlüssel (GOB-Fähigkeit) ersetzt werden, die in einer Datenbank persistiert sind.

RdItemList

Die RdItemList bildet die Schnittstelle zu den Sessions und den RdItems. Über diese Klasse können Rohdatensätze sowohl als XML-Element gespeichert als auch unter der Nutzung des RdManagers zum Backend geschickt werden. Mit Hilfe der RdItemList werden Zugriffe auf Sessions und auch Details im Umgang mit RdItems vor den Vorgangsartenentwicklern verborgen.

RdItem

Beim RdItem handelt es sich um eine Klasse. In erster Linie dient sie der Verwaltung eines XML-Elementes, das den eigentlichen Rohdatensatz repräsentiert. Die öffentliche Schnittstelle dieser Klasse ermöglicht das Lesen/Setzen des XML-Inhaltes, das Lesen/Setzen der Schlüsselinformationen des Rohdatensatzes sowie die Validierung gegen das zu dem gekapselten Rohdatensatz gehörende XML-Schema.

RdItemBase

Die Klasse RdItemBase ist die gemeinsame Basisklasse der Klassen RdItem und RdItemFragment. Sie stellt die Methoden zum Lesen und Schreiben von Werten in der XML-Struktur der Rohdaten über XPath-Lokalisierung zur Verfügung, Der Konstruktor liest die XML Struktur aus einer Templatedatei ein.

RdItemFragment

Beim RdItemFragment handelt es sich um eine Klasse. In erster Linie dient sie der Verwaltung eines XML-Elementes, das einen vorgangsartenspezifischen Teil eines Rohdatensatzes repräsentiert. Die öffentliche Schnittstelle dieser Klasse ermöglicht das Lesen/Setzen des XML-Inhaltes und das Lesen/Setzen der SessionId der Vorgangsart des Rohdatensatzfragmentes.

RdItemFilter(IRdManager)

Der RdItemFilter implementiert wie der RdManager das Interface IRdManager. Er bietet die Möglichkeit, Rohdaten bestimmter Vorgangsarten vom Versand auezuschließen. Der RdItemFilter wird beim Anfordern eines IRdManager-Services zurückgeliefert und ist dem RdManager vorgeschaltet. Der RdItemFilter hält die nicht zu verarbeitenden Rohdaten zurück und übergibt die übrigen Daten an den RdManager, der nun die eigentliche Verarbeitung übernimmt.

RdSender

Der RdSender ist verantwortlich für die Vorbereitung der durch den RdManager aufbereiteten RdItems für den Versand über KISS. Anschließend werden Daten an den SendDataManager für den Versand über KISS übergeben.

SendDataManager

Der SendDataManager ist für die Steuerung des Versands von Rohdaten an das Backend über KISS verantwortlich.

Anwendung

Um Rohdaten verschicken zu können, sollte zunächst die Schnittstelle IRdManager, die vom RdManager implementiert wird, über das Service-Pattern angefordert werden. Der Aufruf hat beispielsweise folgendes Aussehen:

```
IRdManager manager =

    (IRdManager)

    this.site.GetService(typeof(IRdManager));
```

Anschließend wird eine RdItemList erzeugt. Die Erzeugung der RdItemList wird in folgender Weise durchgeführt:

```
RdItemList list = new RdItemList();
```

Die Rohdatensätze werden durch Erzeugen von RdItem Instanzen angelegt. Dabei wird dem Konstruktor der RdItem Klasse die ID des Templates zum Erzeugen der XML-Struktur übergeben.

```
RdItem someItem = new RdItem(templateId);
```

Innerhalb der XML-Struktur können rdFragment-Elemente mit einer SessionId vorkommen.

```
<rdFragement>471146104509</rdFragment>
```

Parallel dazu wird eine RdItemFragment-Instanz erzeugt und die SessionId dem Konstruktor übergeben.

```
RdItemFragment fragment = new RdItemFragment("471146104509",
templateId);
```

Mit Hilfe der Methoden AddRdItem und AddRdItemFragment der IRdManager Schnittstelle werden die Rohdaten an den RdManager übergeben.
Sind alle Rohdaten erzeugt, so wird die Methode CloseAndSend der IRdManager Schnittstelle aufgerufen. Diese führt zur technischen Komplettierung der Rohdatensätze die folgenden Schritte durch:

Integrieren der gekapselten Rohdatensatz-Fragmente aus den RdItemfragment-Instanzen in die jeweiligen RdItem-Instanzen,

Sortierung der RdItem-Instanzen auf Basis des temporären Schlüssels Vergabe der endgültigen Rohdatenschlüssel,

verwaltung und Anstoß des Ersetzungsprozesses der temporären Schlüssel in den Gründen der Rohdatensätze durch die zugeordneten endgültigen Rohdatensatzschlüssel im RdItem,

Verwaltung und Anstoß des Löschprozesses der in den gekapselten Rohdatensätzen enthaltenen nicht befüllten Elemente

Verwaltung und Anstoß des Validierungsprozesses gegen die XML-Schemata der jeweiligen Rohdatensätze

Übergabe der finalisierten RdItem-Instanzen an den RdSender.

SendDataMartager

Der SendDataManager wird durch die Datei "SendDataManager.config" konfiguriert.

Außerdem werden DataActions konfiguriert.

Die Klasse SendDataManager ist Bestandteil des CARBON-Frameworks und liegt im Namespace Carbon Kiss.

Aufgabe der Klasse SendDataManager

Die Aufgabe der Klasse SendDataManger liegt darin, den Versand der Rohdaten an das Backend über KISS zu steuern. Der SendDataManager ist als ein technischer Basisdienst implementiert und als solcher für jede Vorgangsart verfügbar.

Der SendDataManager kann durch Vorgangsarten angesteuert werden. Aus diesem Grund wird er wie beispielsweise der Service IContent als technischer Basisdienst realisiert. Jeder technische Basisdienst wird über die Methode GetService der Site der Vorgangsart bezogen. Der Zugriff auf einen technischen Basisdienst erfolgt nicht direkt, sondern über das zugehörige Interface. In diesem Fall lautet der Name des Interfaces ISendDataManager.

Nachdem Daten vom RdSender an den SendDataManager übergeben wurden, werden diese in der CARBON-Datenbank des EPOS.neu-Clients in einer Tabelle abgelegt und mit einem Einstelldatum versehen.

Die Klasse SendDataManager wird durch die Konfiguration in der Datei SendDataManager.config konfiguriert.

Methoden

Die Klasse SendDataManager leitet vom Interface ISendDataManager, ISupportService und DataService ab. Das Interface ISendDataManager bildet die Schnittstelle zur Klasse SendDataManager, das Interface ISupportService bildet die Schnittstelle zu den Services und die Klasse DataService dient zur Erzeugung von DataServices.

Durch die dargestellten Weiterbildungen der Erfindung ist es möglich, den Vorteil einer hohen Flexibilität mit einer vollständigen Automatisierbarkeit zu verbinden.

Auch die anderen Ausführungsformen der Erfindung zeichnen sich durch geringen Wartungsbedarf, hohe Flexibilität und eine hohe beziehungsweise vollständige Automatisierbarkeit aus.

**Patentansprüche**

1. Datenübertragungssystem zum Übertragen von Daten zwischen einer Zentraleinheit und mehreren Endgeräten,
   **dadurch gekennzeichnet,**
   **dass** die Zentraleinheit und wenigstens eines der Endgeräte durch wenigstens zwei Übertragungskanäle verbindbar sind, dass das System ein Mittel zur Zuweisung eines der Übertragungskanäle aufweist, dass das Mittel zur Zuweisung des Übertragungskanals so ausgestaltet ist, dass es die Zuweisung anhand von Informationen über die zu übermittelnden Daten vornehmen kann und dass bei einer Übertragung von Daten überprüft wird, ob der zugewiesene Übertragungskanal so beschaffen ist, dass er eine Mitübermittlung von weiteren Daten als den ursprünglich zugewiesenen Daten ermöglicht.

2. Benachrichtigungskomponente zum Einsatz in einem Datenübertragungssystem,
   **dadurch gekennzeichnet,**
   **dass** die Benachrichtigungskomponente ein Mittel zum Erfassen von Informationen über Auswahlkriterien für einen zuzuweisenden Übertragungskanal enthält, dass die Benachrichtigungskomponente so beschaffen ist, dass er eine Datenübertragung durch Übertragungskanäle vornehmen kann und dass die Benachrichtigungskomponente anhand der Informationen über die Auswahlkriterien für den zuzuweisenden Übertragungskanal den Übertragungskanal zuweist und dass die Benachrichtigungskomponente ein Mitnehmen von Daten niedrigerer Priorität bei einem für eine Übertragung von Daten höherer Priorität bereits geöffneten Übertragungskanal beinhaltet.

3. Verfahren zum Übertragen von Daten zwischen einer Zentraleinheit und mehreren Endgeräten mit einer Erzeugung und Übertragung der Daten,
   **dadurch gekennzeichnet,**
   **dass** anhand von Eigenschaften der Daten eine Zuweisung eines Übertragungskanals für die Übermittlung der Daten erfolgt und dass bei einer Übertragung von Daten überprüft wird, ob der zugewiesene Übertragungskanal so beschaffen ist, dass er eine Mitübermittlung von weiteren Daten als den ursprünglich zugewiesenen Daten ermöglicht.

4. Verfahren nach Anspruch 3,
   **dadurch gekennzeichnet,**
   **dass** eine Datenübertragung erfolgt, wenn Daten einer vorgebbaren Datenart ein vorgebbares Datenvolumen er-

reicht haben.

Fig. 1

Europäisches
Patentamt

**EUROPÄISCHER RECHERCHENBERICHT**

Nummer der Anmeldung

EP 05 02 7185

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 98/19439 A (CONNECT ONE, INC) 7. Mai 1998 (1998-05-07) * Zusammenfassung * * Seite 1, Zeile 10 - Seite 2, Zeile 3 * * Seite 3, Zeile 11 - Seite 4, Zeile 3 * * Seite 7, Zeile 27 - Seite 8, Zeile 9 * * Seite 10, Zeile 1 - Seite 11, Zeile 5 * * Seite 12, Zeile 13 - Zeile 16 * * Seite 14, Zeile 1 - Seite 16, Zeile 5 * * Seite 18, Zeile 6 - Seite 19, Zeile 11 * ----- | 1-4 | H04L29/06 H04L12/28 |
| A | WO 2004/057828 A (COGNIMA LTD; GREENWELL, THOMAS, RALPH, EDWARDS; SPENCE, STEPHEN, TIMOT) 8. Juli 2004 (2004-07-08) * Seite 1, Zeile 5 - Zeile 12 * * Seite 3, Zeile 4 - Zeile 24 * * Seite 6, Zeile 15 - Seite 9, Zeile 33 * * Seite 12, Zeile 16 - Seite 16, Zeile 5 * * Ansprüche 22,23 * ----- | 1-4 | |
| A | US 2003/149958 A1 (BALUJA SHUMEET ET AL) 7. August 2003 (2003-08-07) * Absatz [0033] * * Absatz [0035] - Absatz [0037] * ----- | 1-4 | **RECHERCHIERTE SACHGEBIETE (IPC)** H04L |

Der vorliegende Recherchenbericht wurde für alle Patentansprüche erstellt

| Recherchenort | Abschlußdatum der Recherche | Prüfer |
|---|---|---|
| Den Haag | 23. Februar 2006 | Kesting, V |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

..................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 02 7185

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-02-2006

| Im Recherchenbericht angeführtes Patentdokument | Datum der Veröffentlichung | Mitglied(er) der Patentfamilie | | Datum der Veröffentlichung |
|---|---|---|---|---|
| WO 9819439 A | 07-05-1998 | BR | 9712399 A | 31-08-1999 |
| | | CA | 2263099 A1 | 07-05-1998 |
| | | CN | 1235729 A | 17-11-1999 |
| | | EA | 1507 B1 | 23-04-2001 |
| | | EP | 0931408 A1 | 28-07-1999 |
| | | IL | 129537 A | 12-02-2003 |
| | | JP | 2001503578 T | 13-03-2001 |
| | | KR | 2000052946 A | 25-08-2000 |
| | | US | 6144641 A | 07-11-2000 |
| | | US | 6456594 B1 | 24-09-2002 |
| | | US | 6016307 A | 18-01-2000 |
| WO 2004057828 A | 08-07-2004 | AU | 2003290306 A1 | 14-07-2004 |
| | | EP | 1576784 A1 | 21-09-2005 |
| | | GB | 2397474 A | 21-07-2004 |
| US 2003149958 A1 | 07-08-2003 | AU | 2003212911 A1 | 02-09-2003 |
| | | WO | 03067377 A2 | 14-08-2003 |

Für nähere Einzelheiten zu diesem Anhang : siehe Amtsblatt des Europäischen Patentamts, Nr.12/82